# EUROPEAN PATENT APPLICATION

(11) **EP 2 306 724 A1**
(43) Date of publication of application: **06.04.2011**
(21) Application number: 09768801.4
(22) Date of filing: 26.06.2009
(51) Int. Cl.: H04N 7/24

(54) **DEVICE, METHOD AND SYSTEM FOR TRANSMITTING DIGITAL BROADCAST SIGNALS**

(30) Priority: 27.06.2008 CN 200810126460
(71) Applicant: Beijing Nufront Mobile Multimedia Tech. Co., Ltd., Beijing 100084 (CN)
(72) Inventor: BAO, Dongshan, Beijing 100084 (CN); SI, Hongwei, Beijing 100084 (CN); LIU, Fei, Beijing 100084 (CN); ZHOU, Yubao, Beijing 100084 (CN)
(74) Representative: Delumeau, François Guy
(86) International application number: PCT/CN2009/072468
(87) International publication number: WO 2009/155876

(57) **Abstract**

A device for transmitting digital broadcast signals comprises: at least a first encoding unit, each of which executes forward error correction encoding for data in a sub-channel; at least a time domain interleaving unit, each of which receives the output data from a first encoding unit and interleaves the data in time domain; a first multiplexing unit, for multiplexing the interleaved data in each sub-channel to form Main Service Channel (MSC) data; a second encoding unit, for executing forward error correction encoding for a second group of data information to acquire Fast Information Channel (FIC) data; a differential modulating unit, for performing differential modulation to FIC data adopting a first modulation mode, and performing differential modulation to MSC data adopting at least two modulation modes; wherein, the modulation level of the first modulation mode is lower than or equal to the modulation level of each modulation mode for MSC data; and a frame generating and transmitting unit, for generating signal unit transmission frames using differential modulation symbol sequences generated by the differential modulating unit and transmitting the signal unit transmission frames.

## Description

### FIELD OF THE INVENTION

The present invention relates to mobile multimedia broadcasting, particularly to a device for transmitting digital broadcasting signals, and further to a method and system for transmitting digital broadcasting signals.

### BACKGROUND OF THE INVENTION

At present, the mainstream mobile TV/mobile multimedia broadcasting transmission standard around the world comprises the Digital Audio Broadcast (DAB) standard, the Digital Video Broadcasting Handheld (DVB-H) standard and the MediaFLO standard. As far as the channel bandwidth is concerned, the DAB standard uses a mode of operation with a bandwidth of 1.712 MHz, while the DVB-H standard and the MediaFLO standard use a mode of operation with various bandwidths.

In the DAB system, when the transmitter is transmitting the digital broadcasting signals, it is required to transmit a first set of data over a Main Service Channel (MSC) and a second set of data over a Fast Information Channel (FIC), In the MSC, the first set of data is transmitted over at least one sub-channel. The first set of data comprises the service data of at least one out of a plurality of services, and the plurality of services mainly comprise audio service, video service, data service or the like. The second set of data mainly comprises a configuration information, a service information of the service data and an emergency information broadcasting or the like. For both FIC and each sub-channel in the MSC, the DAB system performs a differential modulation on the data in the channels and sub-channels by the same Differential Quadrature Phase Shift Keying (DQPSK). It mainly suffers from two drawbacks as follows.
1. The modulation is performed in a fixed manner and is not flexible.
2. Only a differential modulation of low order is used, so that the utilization rate of the frequency resource is low.

### SUMMARY OF THE INVENTION

In view of the above, the technical problem to be solved by the invention is to provide a device for transmitting digital broadcasting signals to overcome the drawbacks in the DAB system.

In an embodiment of a device for transmitting digital broadcasting signals, the device comprises: at least one first encoding unit, each of which performs a forward error correction encoding on data in a sub-channel; at least one time-domain interleaving unit, each of which receives the encoded data output from the one first encoding unit and performs a time-domain interleaving on the encoded data; a first multiplexing unit, which multiplexes the interleaved data output from each of the time-domain interleaving units into Main Service Channel (MSC) data; a second encoding unit, which performs a forward error correction encoding on a second set of data to obtain Fast Information Channel (FIC) data; a differential modulating unit, which performs a differential modulation on the FIC data with a first modulation mode and on the MSC data with at least two modulation modes, wherein the modulation level of the first modulation mode is lower than or equal to that of respective modulation modes for the MSC data; and a frame generating and transmitting unit, which generates signal unit transmission frames by using differential-modulation symbol sequences generated by the differential modulating unit and transmits said signal unit transmission frames. In this embodiment, the modulation on the FIC data is performed with a modulation mode, but the modulation on the MSC data is performed with multiple modulation modes. Since multiple modulation modes are used, the flexibility of modulation is greatly improved. In addition, since the modulation on the MSC data is performed by a modulation mode of high order, it is possible to substantially improve the utilization rate of the frequency resource.

Another technical problem to be solved by the present invention is to provide a method for transmitting digital broadcasting signals. In an embodiment, the method comprises the steps of: performing a forward error correction encoding and a time-domain interleaving on data of each sub-channel independently; multiplexing the data interleaved in time-domain of each sub-channel into MSC data; performing a forward error correction encoding on a second set of data to obtain FIC data; performing a differential modulation on the FIC data with a first modulation mode and on the MSC data with at least two modulation modes, wherein the modulation level of the first modulation mode is lower than or equal to that of respective modulation modes for the MSC data; generating signal unit transmission frames by using differential-modulation symbol sequences generated by the differential modulation and transmitting said signal unit transmission frames. In this embodiment, the modulation on FIC data is performed with a modulation mode, but the modulation on the MSC data is performed with multiple modulation modes. Since multiple modulation modes are used, the flexibility of modulation is greatly improved. In addition, since the modulation on the MSC data is performed by a modulation mode of high order, it is possible to substantially improve the utilization rate of the frequency resource.

A further technical problem to be solved by the present invention is to provide a system for transmitting digital broadcasting signals. In some embodiments, the system comprises: N devices for transmitting digital broadcasting signals, wherein N is an integer larger than 1; and a frequency-division multiplexing unit, which frequency-division multiplexes N-paths signal unit transmission frames generated by said N devices for transmitting digital broadcasting signals into a one-path baseband transmission frame and transmits said one-path baseband transmission frame. With this system, multiple-paths of digital broadcasting signals can be transmitted.

### BRIEF DESCRIPTION OF THE DRAWING

FIG. 1 is a schematic diagram showing an embodiment of a device proposed in the present invention;
FIG. 2 is a schematic diagram showing another embodiment of a device proposed in the present invention;
FIG. 3 is a schematic diagram showing another embodiment of a device proposed in the present invention;
FIG. 4 is a flow chart showing an embodiment of a method proposed in the present invention;
FIG. 5 is a flow chart showing another embodiment of a method proposed in the present invention;
FIG. 6 is a schematic diagram showing an embodiment of a system proposed in the present invention.

### DESCRIPTION OF THE PREFERRED EMBODIMENTS

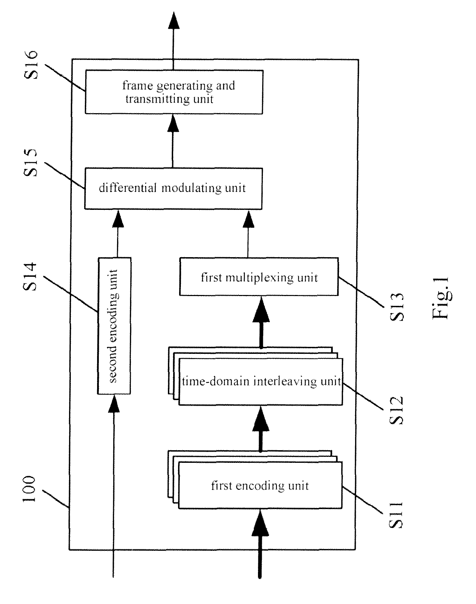

FIG. 1 shows a structure of a device for transmitting digital broadcasting signals 100, which comprises at least one first encoding unit S11, at least one time-domain interleaving unit S12, a first multiplexing unit S13, a second encoding unit S14, a differential modulating unit S15 and a frame generating and transmitting unit S16.

Each of the first encoding units S11 performs a forward error correction encoding on the data of each sub-channel, while each of the time-domain interleaving units S12 receives the encoded data output from a first encoding unit S11 and performs a time-domain interleaving on the encoded data.

The first multiplexing unit S 13 multiplexes the interleaved data output from each of the time-domain interleaving units S12 into MSC data. The second encoding unit S14 performs a forward error correction encoding on a second set of data to obtain FIC data. The Differential modulating unit S 15 performs a differential modulation on the FIC data with a first modulation mode and on the MSC data with at least two modulation modes, wherein the modulation level of the first modulation mode is lower than or equal to that of respective modulation modes for the MSC data. The frame generating and transmitting unit S16 generates signal unit transmission frames by using the differential-modulation symbol sequences generated by the differential modulating unit S15 and transmits said signal unit, transmission frames.

Herein, there are many forward error correction encoding methods available for the first encoding unit S11. As an optional method, the first encoding unit S11 performs an encoding on the data in the sub-channel with a Low Density Parity Check (LDPC) encoding method. In the same way, there are also many forward error correction encoding methods available for the second encoding unit S14. As an optional method, the second encoding unit S 14 performs an encoding on the second set of data with a convolutional encoding method.

During the operation of the system, the mode in which time-domain interleaving is performed on the data in the sub-channel includes but is not limited to the following two modes.
1. The time-domain interleaving is performed on the data in the sub-channel in a fixed mode.
2. The time-domain interleaving is performed on the data in the sub-channel in a variable mode.

In the case that the first mode is selected, the time-domain interleaving unit S12 receives data from the first encoding unit S11 and then directly performs a time-domain interleaving on the received data with preset fixed parameters. In the case that the second mode is selected, the time-domain interleaving unit S12 receives data from the first encoding unit S11 and then performs a time-domain interleaving on the received data according to an interleaving depth indicated by a configuration information. For the first mode, it is very simple to realize, but the interleaving mode is single and not flexible. For the second mode, the interleaving mode is diverse and flexible, but it is relatively complex to realize.

The interleaved data of each sub-channel output from each of the time-domain interleaving units S12 are composed into a Common Interleaved Frame (CIF) in the first multiplexing unit S 13, i.e., is multiplexed into MSC data. In the differential modulating unit S 15, a differential modulation is performed on the MSC data output from the first multiplexing unit S13 and on the FIC data output from the second encoding unit S 14 with different modulation modes. The differential modulation can be performed on the FIC data with DQPSK mode and on the MSC data with DQPSK and Octal Differential Phase Shift Keying (8DPSK) modes. The differential modulation on the MSC data can also be performed with DQPSK and 16-ary Differential Amplitude and Phase Shift Keying (16DAPSK) modes, 8DPSK and 16DAPSK modes, as well as DQPSK, 8DPSK and 16DAPSK modes. By performing modulation on the data in different sub-channels with different modes, it is possible to realize the differential modulation on the MSC data with multiple modulation modes.

The advantages of 8DPSK lie in that it has a strong anti-jamming ability, an excellent bit error rate performance and a high utilization rate of frequency spectrum, and can eliminate the phase ambiguity during a coherent demodulation of Octal Absolute Phase Shift Keying (8PSK), so that the performance of the system is improved. The advantages of 16DAPSK lie in that it has a strong antijamming ability, an excellent bit error rate performance and a high utilization rate of frequency spectrum, and can also eliminate the phase ambiguity during a coherent demodulation of 16-arty Absolute Phase Shift Keying (16PSK).

During the operation of the system, the mode in which a differential modulation is performed on the MSC data includes, but is not limited to the following two modes.

A. The differential modulation on the MSC data is performed in a fixed mode. The term "a fixed mode" herein means that the position of each sub-channel in the MSC and the modulation mode for each sub-channel are set in advance.

In this case, when the differential modulating unit S15 performs a modulation on the MSC data, the differential modulation may be performed directly on the sub-channel at the corresponding position with a preset modulation mode.

B. The differential modulation on the MSC data is performed in a variable mode. The term "a variable mode" herein means that the position of each sub-channel in the MSC and the modulation mode for each sub-channel are not set, but indicated by the configuration information. In this case, when the differential modulating unit S15 performs a modulation on the MSC data, it is required to perform the differential modulation on the sub-channel at the corresponding position with a modulation mode as indicated by the configuration information.

Upon receiving differential-modulation symbol sequences from the differential modulating unit S15, the frame generating and transmitting unit S16 may perform an orthogonal frequency-division multiplexing (OFDM) modulation on the differential-modulation symbol sequences along with phase reference symbols and empty symbols to generate respective OFDM symbols, and then multiplexes the generated continuous OFDM symbols into signal unit transmission frames. Alternatively, the frame generating and transmitting unit S16 performs the OFDM modulation on the differential-modulation symbol sequences along with phase reference symbols to generate respective OFDM4 symbols, and then multiplexes the generated continuous OFDM symbols along with empty symbols into signal unit transmission frames. Herein, the signal unit transmission frames comprise synchronous channels, the FIC and the MSC.

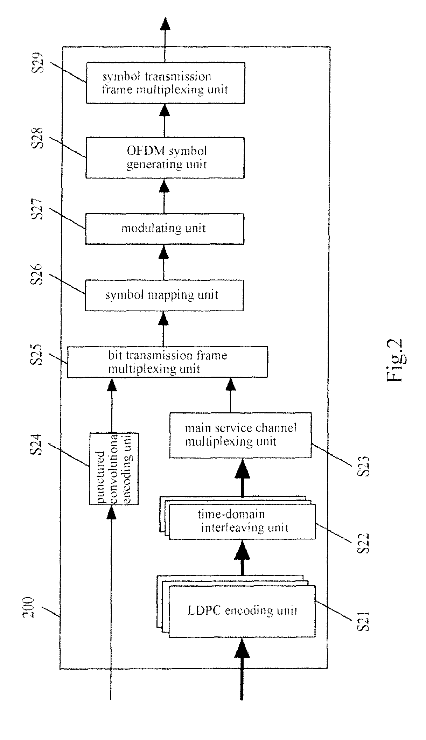

FIG. 2 shows a specific structure of the devices for transmitting digital broadcasting signals in an application scenario. In this application scenario, a time-domain interleaving is performed on the data in the sub-channel in a variable mode, a differential modulation on the MSC data is performed in a variable mode, and thus it is required to indicate the interleaving depth to be used. It is necessary to set parameters in the configuration information for defining sub-channel organization, and said parameters include but are not limited to the symbol mapping mode.

In the FIC, a punctured convolutional encoding unit S24 performs a punctured convolutional encoding on the second set of data comprising the configuration information.

In the MSC, a LDPC encoding unit S21 and a time-domain interleaving unit S22 connected in series of one-path perform a LDPC encoding and a time-domain interleaving independently on the data in a sub-channel; and a main service channel multiplexing unit S23 composes the interleaved data of each sub-channel output from each of the time-domain interleaving units S22 into a CIF.

Herein, the capacity of a sub-channel is calculated in terms of Capacity Unit (CU), wherein the magnitude of a CU is 32×n bits, and the value of n is related with the symbol mapping mode, i.e., n is related with the mode of a differential modulation. For example, when the symbol mapping mode is Quadrature Phase Shift Keying (QPSK), n = 2; when the symbol mapping mode is Octal Phase Shift Keying (8PSK), n = 3; and when the symbol mapping mode is 16-ary Phase Shift Keying (16PSK), n = 4.

After the LDPC encoding unit S21 performs the LDPC encoding on the data, the time-domain interleaving unit S22 performs the time-domain interleaving on the encoded data according to the interleaving depth indicated by the configuration information between LDPC code blocks of the same sub-channel. Alternatively, the time-domain interleaving unit S22 performs a bit-based convolutional interleaving on the encoded data according to said interleaving depth.

The main service channel multiplexing unit S23 arranges CUs of the same length continuously and inserts filling data between CUs of different lengths, so as to compose the data interleaved in time-domain of each sub-channel into a CIF.

A bit transmission frame multiplexing unit S25 performs a bit transmission frame multiplexing on the CIF obtained by the main service channel multiplexing unit S23 and the convolutional encoded FIC data obtained by the punctured convolutional encoding unit S24, so that two-paths of data are combine into one-path data bit stream. The symbol mapping unit S26 performs a symbol mapping on the data of each sub-channel in the MSC data with a mode as indicated by the configuration information, and on the FIC data with QPSK. Then, a modulating unit S27 performs corresponding differential modulation on the CIF and the FIC data to obtain differential-modulation symbol sequences. Alternatively, the modulating unit S27 performs a differential modulation on the same sub-carrier of neighboring OFDM symbols.

An OFDM symbol generating unit S28 performs an OFDM modulation on the differential-modulation symbol sequences along with phase reference symbols and empty symbols to generate respective OFDM symbols. A symbol transmission frame multiplexing unit S29 multiplexes continuous OFDM symbols generated by the OFDM symbol generating unit S28 into signal unit transmission frames.

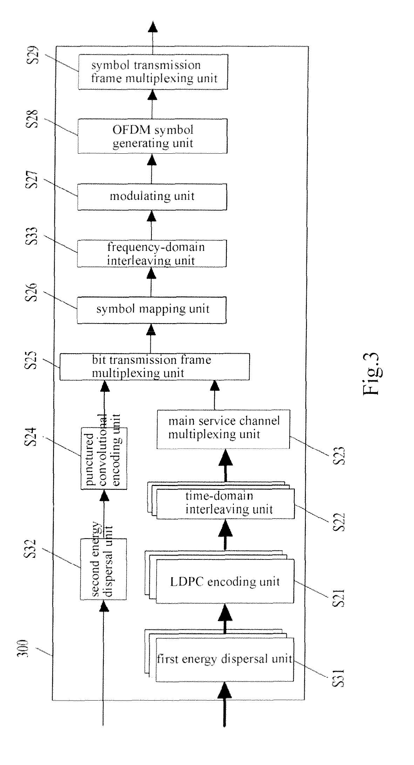

In the embodiment shown in FIG. 2, for the purpose of limiting the length of continuous "0" or continuous "1" which appear in the data in the sub-channel so that the data is dispersed in frequency spectrum and maintains steady, a first energy dispersal unit preceding to each of the LDPC encoding units S21 may be arranged to perform an energy dispersal on the data of each sub-channel. As shown in FIG. 3, the first energy dispersal unit S31 performs a modulo-2 addition on the bit stream of the data bit by bit with the pseudo-random sequence according to the input sequence to generate energy-dispersed data. In the same way, also a second energy dispersal unit S32 preceding to the punctured convolutional encoding unit S24 may be arranged to perform an energy dispersal on the second set of data. Furthermore, a frequency-domain interleaving unit S33 may be arranged between the symbol mapping unit S26 and the modulating unit S27 to perform a frequency-domain interleaving on the mapped symbols from the symbol mapping unit 26. The frequency-domain interleaving unit S33 performs the frequency-domain interleaving on the mapped symbols in a manner that the mapped symbols are divided into blocks according to the number of effective sub-carriers K of OFDM4 symbols in different transmission modes, and then the modulating unit S27 performs a differential modulation on the symbols interleave in frequency-domain. Herein, the frequency-domain interleaving refers to the interleaving on blocks of symbols, and the magnitude of the interleaved block is equal to the number of effective sub-carriers K.

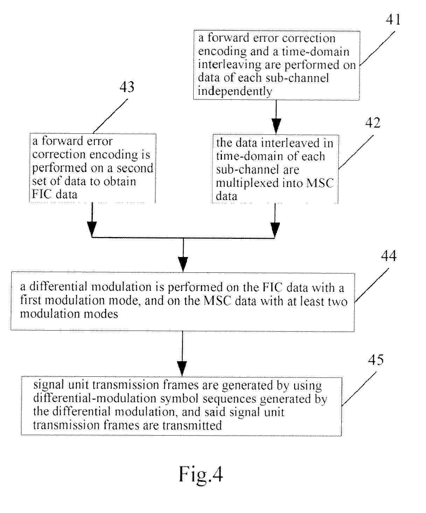

FIG. 4 shows a flow chart of a method for transmitting digital broadcasting signals, which comprises the following steps.

In step 41, a forward error correction encoding and a time-domain interleaving are performed on the data of each sub-channel independently.

In step 42, the data interleave in time-domain in each sub-channel is multiplexed into MSC data, namely, the interleaved data of each sub-channel are composed into a CIF.

In step 43, a forward error correction encoding is performed on a second set of data to obtain FIC data.

In step 44, a differential modulation is performed on the FIC data with a first modulation mode and on the MSC data with at least two modulation modes.

Herein, the modulation level of the first modulation mode is lower than or equal to that of respective modulation modes for the MSC data.

In step 45, signal unit transmission frames are generated by using differential-modulation symbol sequences generated by the differential modulation, and said signal unit transmission frames are transmitted.

Herein, there are many forward error correction encoding methods available for the data of each sub-channel. As an optional method, the encoding on the data in the sub-channel is performed with LDPC encoding method. In the same way, there are also many forward error correction encoding methods available for the second set of data. As an optional method, the encoding on the second set of data is performed with a convolutional encoding method. During the operation of the system, the mode of time-domain interleaving on the data in the sub-channel includes, but is not limited to the following two modes.
1. The time-domain interleaving is performed on the data in the sub-channel in a fixed mode.
2. The time-domain interleaving is performed on the data in the sub-channel in a variable mode.

In the case that the first mode is selected, when the interleaving is performed on the data in the sub-channel, the time-domain interleaving on the received data can be directly performed with preset parameters. In the case that the second mode is selected, when the interleaving is performed on the data in the sub-channel, the time-domain interleaving on the received data is required to be performed according to the interleaving depth indicated by the configuration information. For the first mode, it is very simple to realize, but the interleaving mode is single and not flexible. For the second mode, the interleaving mode is diverse and flexible, but it is relatively complex to realize.

When the differential modulation is performed, the differential modulation can be performed on the FIC data with DQPSK mode and on the MSC data with 8DQPSK. The differential modulation on the MSC data can also be performed with 16DQPSK mode or a mode of higher order.

During operation of the system, the mode in which a differential modulation is performed on the MSC data includes, but is not limited to the following two modes.

A. The differential modulation on the MSC data is performed in a fixed mode. The term "a fixed mode" herein means that the position of each sub-channel in the MSC and the modulation mode for each sub-channel are set in advance.

In this case, when the modulation is performed on the MSC data, a differential modulation may be performed directly on the sub-channel at the corresponding position with a preset modulation mode.

B. The differential modulation on the MSC data is performed in a variable mode. The term "a variable mode" herein means that the position of each sub-channel in the MSC and the modulation mode for each sub-channel are not set, but indicated by the configuration information. In this case, when the modulation is performed on the MSC data, it is required to perform a differential modulation on the sub-channel at the corresponding position with a modulation mode as indicated by the configuration information.

After the differential-modulation symbol sequences are obtained, an OFDM modulation is performed on the differential-modulation symbol sequences along with phase reference symbols and empty symbols to generate respective OFDM symbols, and then the generated continuous OFDM symbols are multiplexed into signal unit transmission frames. Alternatively, the OFDM modulation is performed on the differential-modulation symbol sequences along with phase reference symbols to generate respective. OFDM symbols, and then the generated continuous OFDM symbols along with empty symbols are multiplexed into unlit transmission frames.

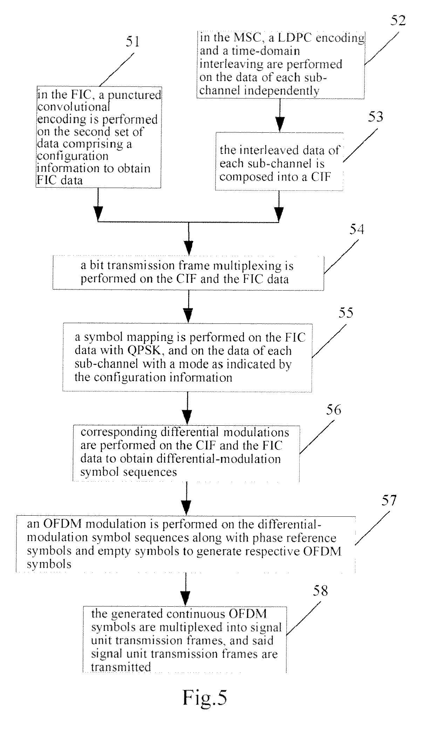

FIG. 5 shows a specific flow chart of a method for transmitting digital broadcasting signals in an application scenario. In this application scenario, a time-domain interleaving is performed on the data in the sub-channel in a variable mode, a differential modulation on the MSC data is performed in a variable mode, and thus it is required to indicate the interleaving depth to be used. It is necessary to set parameters in the configuration information for defining sub-channel organization, and said parameters include but are not limited to the symbol mapping mode.

In step 51, a punctured convolutional encoding is performed on the second set of data comprising the configuration information in the FIC to obtain FIC data.

In step 52, a LDPC encoding and s time-domain interleaving are performed on the data of each sub-channel in the MSC independently.

In each sub-channel, after LDPC encoding is performed on the data, the time-domain interleaving is performed on the encoded data according to the interleaving depth indicated by the configuration information between LDPC code blocks of the same sub-channel. Alternatively, a bit-based convolutional interleaving is performed on the encoded data according to said interleaving depth.

In step 53, the interleaved data of each sub-channel are composed into a CIF. By arranging CUs of the same length continuously and inserting filling data between CUs of different lengths, to compose the data interleaved in time-domain in each sub-channel into a CIF.

In step 54, a bit transmission frame multiplexing is performed on the CIF and the FIC data so as to combine two-paths of data into one-path data bit stream.

In step 55, a symbol mapping is performed on the FIC data with QPSK, and on the data of each sub-channel in the MSC data with a mode as indicated by the configuration information. In step 56, a corresponding differential modulation is performed on the CIF and the FIC data to obtain differential-modulation symbol sequences. Alternatively, the differential modulation is performed on the same sub-carrier of neighboring OFDM symbols.

In step 57, an OFDM modulation is performed on differential-modulation symbol sequences along with phase reference symbols and empty symbols to generate respective OFDM symbols.

In step 58, the generated continuous OFDM symbols are multiplexed into signal unit transmission frames, and said signal unit transmission frames are transmitted.

In the embodiment shown in FIG. 5, for the purpose of limiting the length of continuous "0" or continuous "1" which appear in the data in the sub-channel so that the data is dispersed in frequency spectrum and maintains steady, a step of energy dispersal may be added before step 52 to perform an energy dispersal on the data of each sub-channel. In the same wary, a step of energy dispersal may also be added before step 51 to perform an energy dispersal on the second set of data.

Furthermore, a process of frequency-domain interleaving may be arranged between step 55 and 56 to perform a frequency-domain interleaving on the mapped symbols. The frequency-domain interleaving is performed on the mapped symbols in a manner that the mapped symbols are divided into blocks according to the number of effective sub-carriers K of OFDM symbols in different transmission modes, and then a differential modulation is performed on the symbols interleaved in frequency-domain. Herein, the frequency-domain interleaving refers to the interleaving on blocks of symbols, and the magnitude of the interleaved block is equal to the number of effective sub-carriers K.

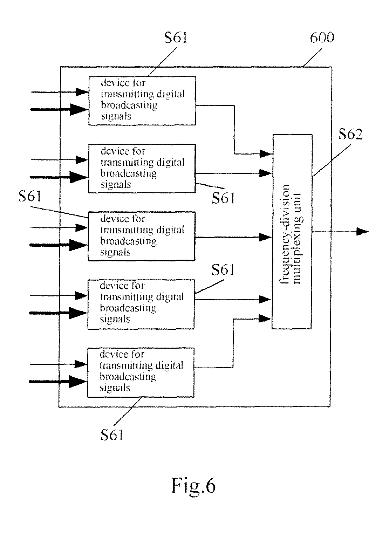

FIG. 6 shows the structure of a system for transmitting digital broadcasting signals 600, which comprises N devices for transmitting digital broadcasting signals S61 and a frequency-division multiplexing unit S62, wherein N is an integer larger than 1.

Said devices for transmitting digital broadcasting signals S61 can use any one of the device for transmitting digital broadcasting signals described in the above embodiments. The frequency-division multiplexing unit S62 frequency-division multiplexes N-paths signal unit transmission frames generated by said N devices for transmitting digital broadcasting signals S61 into a one-path baseband transmission frame and transmits said one-path baseband transmission frame.

It should be noted that the frequency-division multiplexing unit S62 moves said N-paths signal unit transmission frames to N frequency points, and the interval between neighboring two frequency points is 1.544 MHz. In some cases, for example in the case that a bandwidth of 8 MHz is provided, 5-paths signal unit transmission frames (i.e. N = 5) can be frequency-division multiplexed and transmitted, so that the utilization rate of frequency spectrum can be improved as much as possible.

In another embodiment of the method for transmitting digital broadcasting signals, N-paths signal unit transmission frames can be generated by using the method for transmitting digital broadcasting signals described in the above embodiments, and then said N-paths signal unit transmission frames are frequency-division multiplexed into a one-path baseband transmission frame and said one-path baseband transmission frame are transmitted. Alternatively, N-paths signal unit transmission frames are moved to N frequency points, and the interval between neighboring two frequency points is 1.544 MHz. In some cases, for example in the case that a bandwidth of 8 MHz is provided, 5-paths signal unit transmission frames (i.e. N = 5) can be frequency-division multiplexed and transmitted, so that the utilization rate of frequency spectrum can be improved as much as possible.

The present invention further provides an integrated circuit for implementing the method, device or system described in any of the above embodiments. The present invention further provides a computer readable medium for storing programs which are useful for implementing the method described in any of the above embodiments.

Furthermore, it should be noted that the method or device in the above embodiments can be used to not only generate baseband signals, but also generate non-baseband signals. In other words, the baseband signal transmission frame generated by using the above embodiments can be baseband signals, and can also be non-baseband signals.

The embodiments described above are only preferred embodiments of the present invention, and it is not intended to limit the present invention in any way. All of the modifications, equivalents, improvements or the like within the spirit and principle of the present invention should fall within the protection scope of the present invention.

The present invention further provides an integrated circuit for implementing the method, device or system described in any of the above embodiments. The present invention further provides a computer readable medium for storing programs which are useful for implementing the method described in any of the above embodiments.

Furthermore, it should be noted that the method or device in the above embodiments can be used to not only generate baseband signals, but also generate non-baseband signals. In other words, the baseband signal transmission frame generated by using the above embodiments, can be baseband signals, and can also be non-baseband signals.

It will be appreciated for the person skilled in the art that various exemplary steps of method and units of device described herein with reference to the disclosed embodiments can be implemented by the electronic hardware, software, or the combination thereof. To clearly show the interchangeability between hardware and software, a general description has been made to the various exemplary steps and units with respect to their functional form. Whether this functionality is implemented by hardware or software depends on the specific application and the design constraints required by the whale system. The person skilled in the art may implement the described functionality in a variety of ways in connection with each specific application, but it should not be construed that this implementation departs from the scope of the present intention.

The exemplary units described in the embodiments disclosed herein can be implemented or fulfilled by means of a general purpose processor, a digital signal processor (DSP), an application specific integrated circuit (ASIC), a field programmable gate array (FPGA) or other programmable logic devices, a discrete gate or transistor logic, a discrete hardware assembly, or any combination thereof. The general purpose processor can be a microprocessor, but in another case the processor can be any conventional processor, controller, microcontroller, or state machine. The processor can also be implemented as a combination of computing devices, for example, the combination of DSP and microprocessor, a plurality of microprocessors, one or more microprocessors incorporating the DSP core, or any other structures of this kind.

The steps of method described in the embodiments described hereinabove can be directly implemented by hardware, a software module executed by a processor, or the combination thereof. The software module can be stored in a RAM memory, a flash memory, a ROM memory, an PROM memory, an EEPROM memory, a register, a hard disk, a removable disk, a CD-ROM, or any other kinds of storage media known in the art. A typical storage medium is coupled with the processor so that the processor is capable of reading information from the storage medium and writhing information to the storage medium. In an alternative example, the storage medium is an integral part of the processor. The processor and the storage medium may reside in an ASIC. The ASIC may reside in a user station. In an alternative example, the processor and the storage medium can be a separate component in the user station.

According to the disclosed embodiment, the person skilled in the art is enabled to implement or carry out the present invention. As for the person skilled in the art, various modifications to these embodiments are apparent, and the general principles defined herein can also be applied to other embodiments without departing from the scope and gist of the present invention. The embodiments described above are only the preferred embodiments of the present invention, and it is not intended to limit the present invention in any way. All of the modifications, equivalents, improvements or the like within the spirit and principle of the present invention shouted fall within the protection scope of the present invention.

## Claims

1. A device for transmitting digital broadcasting signals, **characterized in that** the device comprises:
at least one first encoding unit, each of which performs a forward error correction encoding on data in a sub-channel;
at least one time-domain interleaving unit, each of which receives the encoded data output from the one first encoding unit and performs a time-domain interleaving on the encoded data;
a first multiplexing unit, which multiplexes the interleaved data output from each of the time-domain interleaving units into Main Service Channel (MSC) data;
a second encoding unit, which performs a forward error correction encoding on a second set of data to obtain FIC data;
a differential modulating unit, which performs a differential modulation on the FIC data with a first modulation mode, and on the MSC data with at least two modulation modes,
wherein the modulation level of the first modulation mode is lower than or equal to that of respective modulation modes for the MSC data; and
a frame generating and transmitting unit, which generates signal unit transmission frames by using differential-modulation symbol sequences generated by the differential modulating unit, and transmits said signal unit transmission frames.

2. A device as claimed in claim 1, **characterized in that** the differential modulating unit performs the differential modulation on the FIC data with Differential Quadrature Phase Shift Keying (DQPSK) mode.

3. A device as claimed in claims 1, **characterized in that** the differential modulating unit performs the differential modulation on the MSC data with DQPSK and Octal Differential Phase Shift Keying (8DPSK) modes.

4. A device as claimed in claim 1, **characterized in that** the differential modulating unit performs the differential modulation on the MSC data with DQPSK and 16-ary Differential Amplitude and Phase Shift Keying (16DAPSK) modes.

5. A device as claimed in claim 1, **characterized in that** the differential modulating unit performs the differential modulation on the MSC data with 8DPSK and 16DAPSK modes.

6. A device as claimed in claim 1, **characterized in that** the differential modulating unit performs the differential modulation on the MSC data with DQPSK, 8DPSK and 16DAPSK modes.

7. A device as claimed in claim 1, **characterized in that** the frame generating and transmitting unit performs an orthogonal frequency-division multiplexing (OFDM) modulation on said differential-modulation symbol sequences along with phase reference symbols and empty symbols, to generate respective OFDM symbols, and multiplexes the generated continuous OFDM symbols into signal unit transmission frames.

8. A device as claimed in claim 1, **characterized in that** the frame generating and transmitting unit performs an OFDM modulation on said differential-modulation symbol sequences along with phase reference symbols, to generate respective OFDM symbols, and multiplexes the generated continuous OFDM symbols along with empty symbols into signal unit transmission frames.

9. A device as claimed in any one of claims 1-8, **characterized in that** the second encoding unit performs a punctured convolutional encoding on the second set of data.

10. A device as claimed in any one of claims 1-8, **characterized in that** the first encoding unit performs a Low Density Parity Check (LDPC) encoding on the data in each sub-channel.

11. A device as claimed in any one of claims 1-8, **characterized in that** the device further comprises a plurality of first energy dispersal units, each of which performs an energy dispersal on the data of a sub-channel and outputs the results to the first encoding unit of the sub-channel.

12. A device as claimed in any one of claims 1-8, **characterized in that** the device further comprises a second energy dispersal unit, which performs an energy dispersal on the second set of data and outputs the results to the second encoding unit.

13. A device as claimed in any one of claims 1-8, **characterized in that** data of the second set of data comprises a configuration information.

14. A method for transmitting digital broadcasting signals, **characterized in that** comprises the steps of:
performing a forward error correction encoding and a time-domain interleaving on the data of each sub-channel independently;
multiplexing the data interleaved in time-domain of each sub-channel into MSC data;
performing a forward error correction encoding on data of a second set of data, to obtain Fast Information Channel (FIC) data;
performing a differential modulation on the FIC data with a first modulation mode and on the MSC data with at least two modulation modes, wherein the modulation level of the first modulation mode is lower than or equal to that of respective modulation modes for the MSC data;
generating signal unit transmission frames by using differential-modulation symbol sequences generated by the differential modulation, and transmitting said signal unit transmission frames.

15. A method as claimed in claim 14, **characterized in that** the differential modulation is performed on the FIC data with Differential Quadrature Phase Shift Keying (DQPSK)
mode.

16. A method as claimed in claim 14, **characterized in that** the differential modulation is performed on the MAC data with DQPSK and Octal Differential Phase Shift Keying (8DQPSK) modes.

17. A method as claimed in claim 14, **characterized in that** the differential modulation is performed on the MSC data with DQPSK and 16-ary Differential Amplitude and Phase Shift Keying (16DAPSK) modes.

18. A method as claimed in claim 14, **characterized in that** the differential modulation is performed on the MSC, data with 8DPSK and 16DAPSK modes.

19. A method as claimed in claim 14, **characterized in that** the differential modulation is performed on the MSC data with DQPSK, 8DPSK and 16DAPSK modes.

20. A method as claimed in claim 14, **characterized in that** an orthogonal frequency-division multiplexing (OFDM) modulation is performed on said differential-modulation symbol sequences along with phase reference symbols and empty symbols, to generate respective OFDM symbols, and the generated continuous OFDM symbols are multiplexed into signal unit transmission frames.

21. A method as claimed in claim 14, **characterized in that** the OFDM modulation is performed on said differential-modulation symbol sequences along with phase reference symbols, to generate respective OFDM symbols, and the generated continuous OFDM symbols along with empty symbols are multiplexed into signal unit transmission frames.

22. A method as claimed in any one of claims 14-21, **characterized in that** a punctured convolutional encoding is performer on the second set of data.

23. A method as claimed in any one of claims 14-21, **characterized in that** a Low Density Parity Check (LDPC) encoding is performed on the data of each sub-channel.

24. A method as claimed in any one of claims 14-21, **characterized in that** before the forward error correction encoding is performed on the data of each sub-channel independently, the method further comprises a step of performing an energy dispersal on the data of each sub-channel independently.

25. A method as claimed in any one of claims 14-21, **characterized in that** before the forward error correction encoding is performed on the second set of data, the method further comprises a step of performing an energy dispersal on the second set of data.

26. A method as claimed in any one of claims 14-21, **characterized in that** the second set of data comprises a configuration information.

27. A system for transmitting digital broadcasting signals, **characterized in that** the system comprises:
N devices for transmitting digital broadcasting signals as claimed in any one of claims 1-13, wherein N is an integer larger than I; and
a frequency-division multiplexing unit, which frequency-division multiplexes N-paths signal unit transmission frames generated by said N devices for transmitting digital broadcasting signals into a one-path baseband transmission frame, and transmits said one-path baseband transmission frame.

28. A system as claimed in claim 27, **characterized in that** said frequency-division multiplexing unit moves said N-paths signal unit transmission frames to N frequency points, wherein the interval between neighboring two frequency points is 1.544 MHz.

29. A system as claimed in claim 28, **characterized in that** N = 5.

30. A method for transmitting digital broadcasting signals, **characterized in that** the methods comprises the steps of:
generating the N-paths signal unit transmission frames by using a method for transmitting digital broadcasting signals as claimed in any one of claims 14-26;
frequency-division multiplexing said N-paths signal unit transmission frames into a one-path baseband transmission frame, and transmitting said one-path baseband transmission frame.

31. A method as claimed in claim 30, **characterized in that** said N-paths signal unit transmission frames are moved to N frequency points, wherein the interval between neighboring two frequency points is 1.544 MHz.

32. A method as claimed in claim 31, **characterized in that** N = 5.
